Europäisches Patentamt

European Patent Office

Office européen des brevets

(19)

(11) **EP 1 366 479 B1**

(12) **FASCICULE DE BREVET EUROPEEN**

(45) Date de publication et mention
de la délivrance du brevet:
**09.11.2005 Bulletin 2005/45**

(21) Numéro de dépôt: **02718252.6**

(22) Date de dépôt: **07.03.2002**

(51) Int Cl.⁷: **G08G 1/0962**

(86) Numéro de dépôt international:
**PCT/FR2002/000829**

(87) Numéro de publication internationale:
**WO 2002/077948 (03.10.2002 Gazette 2002/40)**

(54) **DISPOSITIF DE DETECTION D'UNE SURFACE DE ROULEMENT POUR VEHICULE ET VEHICULE UTILISANT UN TEL DISPOSITIF**

VORRICHTUNG ZUR DETEKTION DER LAUFFLÄCHE UND FAHRZEUG MIT SOLCH EINER EINRICHTUNG

DEVICE FOR DETECTING A RUNNING SURFACE FOR VEHICLE AND VEHICLE USING SAME

(84) Etats contractants désignés:
**AT BE CH CY DE DK ES FI FR GB GR IE IT LI LU MC NL PT SE TR**

(30) Priorité: **08.03.2001 FR 0103163**

(43) Date de publication de la demande:
**03.12.2003 Bulletin 2003/49**

(73) Titulaire: **Peugeot Citroen Automobiles 92200 Neuilly Sur Seine (FR)**

(72) Inventeur: **RIAT, Jean-Christophe F-95870 Bezons (FR)**

(74) Mandataire: **Timoney, Ian Charles Craig et al Peugeot Citroen Automobiles, Département Propriété Industrielle (081) 18, rue des Fauvelles 92250 La Garenne Colombes (FR)**

(56) Documents cités:
**EP-A- 0 049 722      EP-A- 0 451 117
EP-A- 0 960 775      FR-A- 2 759 647
US-A- 5 225 827      US-A- 5 982 278**

## Description

L'invention se rapporte à un dispositif de détection d'une surface de roulement pour véhicule, ainsi qu'à un véhicule utilisant un tel dispositif de détection.

L'invention concerne plus particulièrement un dispositif de détection comportant une pluralité de capteurs destinés à être orientés vers une surface de roulement pour déterminer des modifications de cette dernière, ainsi que des moyens de traitement de données des informations relevées par les capteurs.

Le document EP860001 décrit un tel dispositif de détection appliqué à un véhicule et utilisant des capteurs infra-rouge en vue de signaler à l'utilisateur du véhicule un éventuel changement de surface de roulement ou le franchissement d'une ligne de marquage au sol.

Ce type de dispositif présente un fonctionnement global satisfaisant, cependant, dans certains cas, il ne permet pas de détecter avec une qualité suffisante toutes les modifications de la surface de roulement.

Un but de la présente invention est de proposer un dispositif de détection d'une surface de roulement ayant une qualité de détection améliorée par rapport à l'art antérieur, tout en présentant une structure simple et peu coûteuse.

A cette fin, le dispositif selon l'invention, par ailleurs conforme à la définition générique qu'en donne le préambule ci-dessus, est essentiellement caractérisé en ce qu'au moins une partie des capteurs sont disposés relativement de façon que les distances transversales séparant deux points de visée au sol adjacents de capteurs sont croissantes en direction d'un axe longitudinal et selon une direction sensiblement perpendiculaire à cet axe.

Par ailleurs, l'invention peut comporter l'une ou plusieurs des caractéristiques suivantes :

- le dispositif comporte au moins cinq capteurs,

- les capteurs sont disposés de part et d'autre d'un axe longitudinal médian, et les distances transversales entre les points de visée au sol des capteurs sont sensiblement symétriques par rapport à cet axe,

- la distance dn transversale en cm séparant deux points de visée au sol adjacents de capteurs est donnée par la formule

$$dn = L2 . (\frac{E + L1}{E + 2c})^{n},$$

de façon à détecter notamment une ligne de marquage au sol discontinue, et dans laquelle n est le numéro d'ordre du point de visée au sol en direction de l'axe longitudinal, L1 la longueur en cm d'un tiret de la ligne discontinue, L2 la largeur en cm d'un tiret de la ligne discontinue, E la distance en cm séparant deux tirets consécutifs, et c une constante déterminée définissant une marge de sécurité de détection en cm.

Un autre but de l'invention est de proposer un véhicule utilisant un tel dispositif de détection et palliant tout ou partie des inconvénients de l'art antérieur.

A cette fin, le véhicule selon l'invention, comportant une pluralité de capteurs orientés vers la surface de roulement, pour déterminer des modifications de cette dernière, des moyens de traitement de données des informations relevées par les capteurs, caractérisé en ce qu'au moins une partie des capteurs sont disposés relativement de façon que les distances transversales séparant deux points de visée au sol adjacents de capteurs sont croissantes de l'extérieur vers l'intérieur du véhicule selon une direction sensiblement perpendiculaire à l'axe longitudinal médian du véhicule.

Par ailleurs, le véhicule peut comporter l'une ou plusieurs des caractéristiques suivantes :

- les capteurs sont disposés de part et d'autre de l'axe longitudinal médian du véhicule, et les distances transversales entre les points de visée au sol des capteurs sont sensiblement symétriques par rapport à cet axe,

- la distance dn transversale en cm séparant deux points de visée au sol adjacents de capteurs est donnée par la formule

$$dn = L2 . (\frac{E + L1}{E + 2c})^{n},$$

de façon à détecter notamment la position du véhicule par rapport à une ligne de marquage au sol discontinue, et dans laquelle n est le numéro d'ordre du point de visée au sol d'un capteur de l'extérieur vers l'intérieur du véhicule, L1 la longueur en cm d'un tiret de la ligne discontinue, L2 la largeur en cm d'un tiret de la ligne discontinue, E la distance en cm séparant deux tirets consécutifs, et c une constante déterminée définissant une marge de sécurité de détection en cm,

- le véhicule comporte onze capteurs,

- au moins une partie des capteurs sont orientés latéralement vers l'extérieur du véhicule,

- au moins une partie des capteurs sont inclinés par rapport à la verticale avec un angle sensiblement égal ou supérieur à leur demi-angle de cône de vision,

- au moins une partie des capteurs sont inclinés par rapport à la verticale avec un angle compris entre 5 et 45 degrés environ,

- au moins une partie des capteurs sont disposés dans le bouclier avant du véhicule.

D'autres particularités et avantages apparaîtront à la lecture de la description ci-après, faite en référence aux figures dans lesquelles :

- la figure 1 représente une vue schématique de dessus d'un véhicule sur une route,

- la figure 2 représente une vue schématique et partielle de l'avant d'un véhicule illustrant un premier agencement de capteurs de détection selon l'invention,

- la figure 3 représente une vue schématique de dessus de la partie avant d'un véhicule illustrant la répartition des points de visée au sol d'un second agencement préféré de capteurs de détection selon l'invention,

- les figures 4 et 5 représentent respectivement une troisième et une quatrième répartition des points de visée au sol de capteurs de détection selon l'invention,

- la figure 6 représente un schéma synoptique d'un exemple de structure et de fonctionnement du dispositif de détection conforme à l'invention.

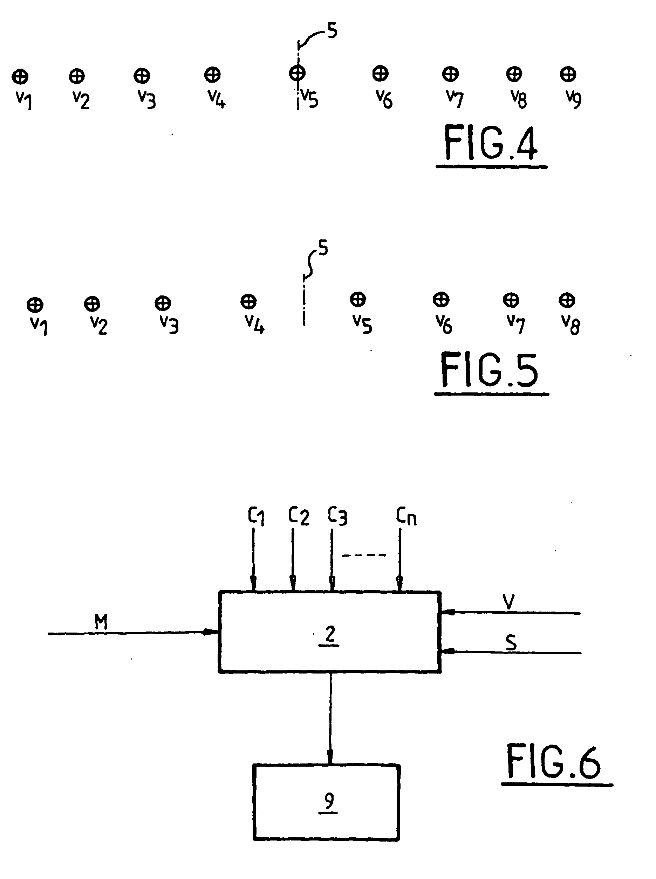

Le dispositif de détection d'une surface de roulement selon l'invention illustré notamment aux figures 2 et 6 comporte une pluralité de capteurs c1 à cn reliés à des moyens 2 de traitement de données, tel qu'un calculateur.

Dans l'exemple de réalisation décrit ci-dessus, les capteurs sont montés sur un véhicule 1 et orientés vers la surface de roulement 4 pour détecter des modifications de cette dernière, et notamment l'apparition de marquages au sol. Les moyens 2 de traitement sont constitués, par exemple, d'un calculateur d'un réseau multiplexé du véhicule 1.

Selon l'invention, le véhicule 1 comporte une pluralité de capteurs disposés relativement de façon que les distances transversales séparant deux points de visée au sol adjacents sont croissantes de l'extérieur vers l'intérieur du véhicule 1 selon une direction sensiblement perpendiculaire à l'axe longitudinal 5 médian du véhicule.

En effet, de manière surprenante un tel agencement de capteurs confère une qualité de détection améliorée par rapport aux systèmes de l'art antérieur. En particulier, on constate que l'invention permet une détection plus fiable et plus exhaustive d'une discontinuité dans la surface et notamment une ligne de marquage au sol.

Dans l'exemple de réalisation décrit à la figure 2, le véhicule comporte quatre capteurs c1 à c4 répartis pour moitié de chaque côté du véhicule 1. Chaque capteur c1 à c4 a une surface ou point de visée au sol v1 à v4 respectif. De préférence, les quatre capteurs c1 à c4 sont disposés de façon sensiblement symétrique par rapport à l'axe 5 longitudinal médian du véhicule. Les deux points de visée au sol v1, v2 ou v4, v3 des capteurs situés d'un même côté du véhicule sont espacés par exemple d'environ 8 à 25 cm environ, et de préférence environ 12 cm. Les points de visée au sol v2, v3 des capteurs c2, c3 les plus proches de l'axe 5 longitudinal médian sont espacés, quant à eux d'environ 1m à 1,8m.

En variante, et de préférence, le dispositif selon l'invention comporte au moins cinq capteurs, de sorte que l'agencement de la figure 2 peut être modifié en ajoutant un capteur supplémentaire au niveau de l'axe 5 longitudinal médian du véhicule. Le point de visée au sol du cinquième capteur peut être situé à égale distance des points de visée v2, v3 au sol des deux capteurs adjacents c2, c3.

Dans une autre variante de réalisation avantageuse, la distance dn transversale en cm séparant deux points de visée au sol adjacents vn, vn+1 des capteurs est donnée par la formule $dn = k.R^n$, dans laquelle n est le numéro d'ordre du point de visée au sol de l'extérieur vers l'intérieur du véhicule, R est un premier coefficient multiplicatif constant sensiblement égal à 1,2, et k un second coefficient constant sensiblement égal à 10.

Comme précédemment, cette configuration confère une détection améliorée par rapport aux systèmes de l'art antérieur, tout en conciliant une simplicité de structure et un faible coût.

Dans encore une autre variante de réalisation avantageuse, le positionnement des capteurs peut être adapté notamment à la détection de lignes de marquage au sol discontinues. Ainsi, la distance dn transversale en cm séparant deux points de visée au sol vn, vn+1 adjacents peut être donnée par la formule :

$$dn = L2. \left(\frac{E + L1}{E + 2c}\right)^n,$$

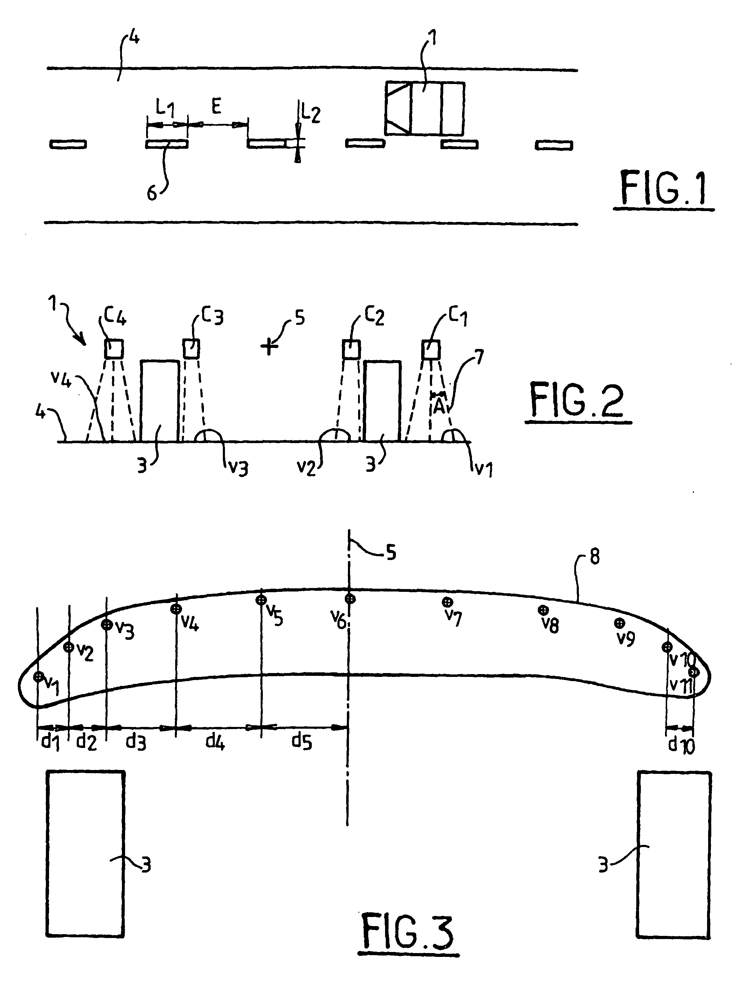

dans laquelle n est le numéro d'ordre du point de visée au sol vn d'un capteur de l'extérieur vers l'intérieur du véhicule, L1 la longueur en cm d'un tiret 6 de la ligne discontinue, L2 la largeur en cm d'un tiret 6 de la ligne discontinue, E la distance en cm séparant deux tirets 6 consécutifs et c une constante déterminée définissant une marge de sécurité de détection en cm (figure 1).

La marge de sécurité c de détection est choisie arbitrairement en fonction des applications envisagées et de la précision de détection souhaitée. La marge de sécurité c constitue la distance minimale de surveillance au sol par un capteur à partir de laquelle un changement peut être considéré comme un marquage potentiel. C'est-à-dire que la marge de sécurité c agit comme une distance formant un filtre, pour ne pas prendre en compte de petits objets présents sur la surface 4 de roulement, tels que des papiers. La marge c de sécurité peut être fixée à une valeur comprise, par exemple, entre 0 et 50 cm, et de préférence 20 cm environ.

Cet agencement de capteurs selon l'invention permet une détection fiable des changements de surface 4 de roulement du véhicule 1, et est particulièrement bien adaptée à la détection d'un marquage au sol discontinu.

En particulier, il a été constaté qu'un tel agencement permet une détection fiable et précoce d'une dérive d'un véhicule par rapport à sa trajectoire, notamment par rapport à une ligne discontinue d'un marquage au sol. En effet, lorsque le véhicule dérive de sa trajectoire avec un faible angle d'incidence et que la surface de roulement change (par exemple franchissement d'un marquage discontinu), les capteurs ayant des points de visée au sol v1, vn situés le plus à l'extérieur du véhicule détectent cet état. Une dérive avec un angle d'incidence légèrement supérieur est détecté par les capteurs ayant les points de visée v2, vn-1 suivants en direction de l'intérieur du véhicule et ainsi de suite.

C'est-à-dire qu'il est apparu que plus l'angle d'incidence du véhicule par rapport à une frontière (marquage discontinu ou autre changement de surface) est faible, plus la détection est réalisée par les capteurs dont les points de visée au sol sont situés à l'extérieur du véhicule. Cette détection par les capteurs dits "extérieurs" permet une détection précoce d'une éventuelle dérive du véhicule par rapport à sa trajectoire.

Pour dimensionner le dispositif selon l'invention de façon qu'il détecte n'importe quel marquage au sol discontinu, c'est-à-dire que pour qu'il s'adapte aux différents marquages de différents pays, on peut utiliser la formule

$$d_n = L2 . \left(\frac{E + L1}{E + 2c}\right)^n,$$

en fixant la largeur de tiret L2 à sa valeur la plus faible possible rencontrée.

De même, on fixe le facteur $\frac{E+L1}{E+2c}$ à sa valeur la plus faible possible rencontrée.

Ainsi, dans le cas des principaux pays européens, la largeur de tiret L2 minimale est de l'ordre de 10 cm tandis que le facteur ($\frac{E+L1}{E+2s}$) est sensiblement égal à 1,2 (marge c de sécurité fixée à 20cm). De sorte que dans un mode de réalisation particulièrement avantageux, la distance dn transversale en cm séparant deux points de visée au sol vn, vn+1 adjacents peut être donnée par la formule : $d_n = 10 \times 1{,}2^n$.

Le véhicule illustré à la figure 3 comprend onze capteurs disposés dans le bouclier 8 avant du véhicule, devant les roues 3 avant du véhicule, et conformément à la formule ci-dessus. Les onze capteurs sont symbolisés uniquement par leur point de visée au sol correspondant v1 à v11.

Ainsi, la distance d1 entre le premier v1 et le second v2 point de visée au sol est sensiblement égale à 12cm; la distance d2 entre le second v2 et le troisième point de visée au sol v3 est sensiblement égale à 14,4cm; la distance d3 entre le troisième v3 et le quatrième v4 point de visée au sol est sensiblement égale à 17,3cm; la distance d4 entre le quatrième v4 et le cinquième point de visée au sol v5 est sensiblement égale à 20,7cm; et la distance d5 entre le cinquième v5 et le sixième point de visée au sol v6 est sensiblement égale à 25cm. Dans une telle configuration dans laquelle le nombre de capteurs est impair, un point de visée au sol v6 est situé sensiblement au niveau de l'axe 5 de symétrie longitudinal médian du véhicule.

Les points de visée au sol v11 à v6 situés de l'autre côté de l'axe 5 longitudinal médian du véhicule sont disposés de manière sensiblement symétrique par rapport à cet axe 5 (d10=d1).

Les figures 4 et 5 illustrent deux autres exemples d'agencement de capteurs de détection comportant respectivement neuf et huit capteurs disposés symétriquement par rapport à des axes 5 de symétrie respectifs.

Dans le mode de réalisation de la figure 4, les distances transversales successives séparant les points de visée au sol v1 à v5 adjacents en direction de l'axe 5 peuvent être sensiblement égales respectivement à 12cm; 14,4cm; 17,3cm et 45,7cm.

Dans le mode de réalisation de la figure 5, les distances transversales successives séparant les points de visée au sol v1 à v5 adjacents en direction de l'axe 5 peuvent être sensiblement égales respectivement à 12cm; 14,4cm; 17,3cm et 90cm.

Selon l'invention, les capteurs cn et donc leurs points de visée au sol vn peuvent être disposés de manière indifférente selon des directions parallèles à l'axe 5 longitudinal du véhicule. De préférence cependant, les capteurs cn et donc les points de visée au sol vn sont disposés dans la partie avant du véhicule, de façon à détecter au plus tôt une variation dans la surface 4 de roulement. De même, les capteurs peuvent être disposés dans toute autre partie du véhicule, par exemple dans des rétroviseurs. De plus, dans d'autres applications, le dispositif peut comporter plus de onze capteur (cas d'un camion notamment).

Les capteurs décrits ci-dessus sont constitués de préférence de systèmes comportant des moyens d'émission d'ondes dans un domaine peu perturbé de la lumière, par exemple des ondes infra-rouge et des moyens de réception de ces ondes réfléchies. Bien entendu, ces capteurs infra-rouge peuvent être remplacés ou juxtaposés à des capteurs à ultrasons et/ou des capteurs vidéo ou tout autre système équivalent.

Bien entendu, l'invention ne saurait se limiter aux exemples de réalisation décrits ci-dessus. Ainsi, on peut envisager un dispositif de détection dans lequel des capteurs sont disposés d'un seul côté du véhicule, pour surveiller un changement de surface uniquement du côté concerné.

Par ailleurs, tout ou partie des capteurs peuvent être orientés latéralement vers l'extérieur du véhicule.

En particulier, les capteurs peuvent être inclinés vers l'avant ou vers l'arrière et/ou vers un côté du véhicule par rapport à la verticale.

De préférence, l'angle d'inclinaison des capteurs avec la verticale est sensiblement égal ou supérieur à leur demi-angle A de cône de vision 7. Le cône de vision 7 d'un capteur constitue la fenêtre angulaire de vision du capteur (figure 2).

De préférence les capteurs sont inclinés par rapport à la verticale avec un angle compris entre 5 et 45 degrés environ et de préférence égal à 15 degrés environ.

L'orientation des capteurs définie ci-dessus associe une bonne qualité de détection du sol avec une précocité de la détection. En effet, on constate que la taille, la forme et la position obtenues des points de visée au sol des signaux émis par les capteurs améliorent la qualité de détection du système par rapport à l'art antérieur.

De préférence, la surface au sol visée par un capteur décrit une trace sensiblement elliptique ou circulaire et ayant un diamètre de l'ordre de 5 à 10 cm environ. Par ailleurs, les capteurs sont situés de préférence à une hauteur du sol comprise entre 15cm et 1m.

En se référant à la figure 6, le dispositif de détection peut être utilisé pour avertir le conducteur d'une éventuelle dérive de la trajectoire du véhicule. En fonction des informations délivrées par les capteurs c1 à cn, les moyens 2 de traitement de données peuvent activer des moyens 9 de sécurité tel que des moyens de signalisation vers l'extérieur (clignotant par exemple) ou à l'utilisateur du véhicule (signal lumineux et/ou sonore et/ou tactile).

Avantageusement, l'activation ou non des moyens 9 de sécurité peut être conditionnée également à une information M représentative de la mise en marche ou non du système de détection (interrupteur par exemple), et/ou en fonction de la vitesse V du véhicule, et/ou en fonction d'un état S d'activation ou non des clignotants du véhicule.

C'est-à-dire que le système de surveillance et de sécurité peut comporter un interrupteur de commande de sa mise en marche ou de son arrêt et pouvant être actionné par l'utilisateur du véhicule.

On peut également envisager l'activation du dispositif de surveillance et d'alerte que lorsque la vitesse V du véhicule est supérieure à un seuil de l'ordre, par exemple, de 80km/h.

De préférence également, les moyens de traitement de données n'activent pas les moyens 9 de sécurité lorsqu'un franchissement est détecté quasi simultanément des deux côtés du véhicule. De cette façon, le franchissement normal d'une ligne transversale n'est pas signalée à l'utilisateur du véhicule.

De la même façon, les moyens 9 d'alerte et de sécurité peuvent n'être activés que lorsque la détection d'une discontinuité anormale par un premier capteur est confirmée par au moins une seconde mesure réalisée par un capteur adjacent.

Enfin, bien que l'invention ait été décrite en liaison avec des modes de réalisation particuliers, elle comprend tous les équivalents techniques des moyens tels que définis par les revendications qui suivent.

**Revendications**

**1.** Dispositif de détection d'une surface de roulement pour véhicule, comportant une pluralité de capteurs (c1 à cn) destinés à être orientés vers la surface (4) de roulement pour déterminer des modifications de cette dernière, et des moyens (2) de traitement de données des informations relevées par les capteurs, **caractérisé en ce qu'**au moins une partie des capteurs sont disposés relativement de façon que les distances (d1 à d10) transversales séparant deux points de visée au sol (v1 à v11) adjacents de capteurs (cn) sont croissantes en direction d'un axe longitudinal (5) et selon une direction sensiblement perpendiculaire à cet axe (5).

**2.** Dispositif de détection selon la revendication 1, **caractérisé en ce qu'**il comporte au moins cinq capteurs (c1 à c5).

**3.** Dispositif de détection selon la revendication 1 ou 2, **caractérisé en ce que** les capteurs (c1 à cn) sont disposés de part et d'autre d'un axe (5) longitudinal médian, et **en ce que** les distances (d1 à d10) transversales entre les points de visée au sol (vn) des capteurs sont sensiblement symétriques par rapport à cet axe (5).

**4.** Dispositif de détection selon l'une quelconque des revendications 1 à 3, **caractérisé en ce que** la distance (dn) transversale en cm séparant deux points de visée au sol (vn, vn+1) adjacents de capteurs est donnée par la formule $d_n = k.R^n$, dans laquelle n est le numéro d'ordre du point de visée au sol (vn) en direction de l'axe (5) longitudinal, R est un premier coefficient multiplicatif constant sensiblement égal à 1,2 et k un second coefficient constant sensiblement égal à 10.

**5.** Dispositif selon l'une quelconque des revendicaitons 1 à 3, **caractérisé en ce qu'**il comprend onze capteurs; la distance d1 entre le premier v1 et le second v2 point de visée au sol étant sensiblement égale à 12cm; la distance d2 entre le second v2 et le troisième point de visée au sol v3 étant sensiblement égale à 14,4cm; la distance d3 e tre le troisième v3 et le quatrième v4 point de visée au sol étant sensiblement égale à 17,3cm; la distance d4 entre le quatrième v4 et le cinquième point de visée au sol v5 étant sensiblement égale à 20,7cm; et la distance d5 entre le cinquième v5 et le sixième point de visée au sol v6 étant sensiblement égale à 25cm.

6. Dispositif de détection selon l'une quelconque des revendications 1 à 3, **caractérisé en ce que** la distance (dn) transversale en cm séparant deux points de visée au sol (vn, vn+1) adjacents de capteurs est donnée par la formule

$$dn = L2 \cdot \left(\frac{E + L1}{E + 2c}\right)^n,$$

de façon à détecter notamment une ligne de marquage au sol discontinue, et dans laquelle n est le numéro d'ordre du point de visée au sol (vn) en direction de l'axe (5) longitudinal, L1 la longueur en cm d'un tiret (6) de la ligne discontinue, L2 la largeur en cm d'un tiret (6) de la ligne discontinue, E la distance en cm séparant deux tirets (6) consécutifs, et c une constante déterminée définissant une marge de sécurité de détection en cm.

7. Véhicule comportant un dispositif de détection conforme à l'une quelconque des revendications précédentes.

8. Véhicule selon la revendication 7, **caractérisé en ce que** les capteurs (c1 à c11) sont disposés de part et d'autre de l'axe (5) longitudinal médian du véhicule, et **en ce que** les distances (d1 à d10) transversales entre les points de visée au sol (v1 à v11) des capteurs sont sensiblement symétriques par rapport à cet axe (5).

9. Véhicule selon la revendication 7 ou 8, **caractérisé en ce que** la distance (dn) transversale en cm séparant deux points de visée au sol (vn, vn+1) adjacents de capteurs est donnée par la formule dn = k.R$^n$, dans laquelle n est le numéro d'ordre du point de visée au sol (vn) en direction de l'axe (5) longitudinal, R est un premier coefficient multiplicatif constant sensiblement égal à 1,2 et k un second coefficient constant sensiblement égal à 10.

10. Véhicule selon la revendication 7 ou 8, **caractérisé en ce que** la distance (dn) transversale en cm séparant deux points de visée au sol (vn, vn+1) adjacents de capteurs est donnée

$$dn = L2 \cdot \left(\frac{E + L1}{E + 2c}\right)^n,$$

de façon à détecter notamment la position du véhicule par rapport à une ligne de marquage au sol discontinue, et dans laquelle n est le numéro d'ordre du point de visée au sol (vn) d'un capteur (cn) de l'extérieur vers l'intérieur du véhicule (1), L1 la longueur en cm d'un tiret (6) de la ligne discontinue, L2 la largeur en cm d'un tiret (6) de la ligne discontinue, E la distance en cm séparant deux tirets (6) consécutifs, et c une constante déterminée définissant une marge de sécurité de détection en cm.

11. Véhicule selon l'une quelconque des revendications 7 à 10, **caractérisé en ce qu'**il comporte onze capteurs (c1 à c11).

12. Véhicule selon la revendication 11, **caractérisé en ce que** la distance d1 entre le premier v1 et le second v2 point de visée au sol est sensiblement égale à 12cm; la distance d2 entre le second v2 et le troisième point de visée au sol v3 est sensiblement égale à 14,4cm; la distance d3 entre le troisième v3 et le quatrième v4 point de visée au sol est sensiblement égale à 17,3cm; la distance d4 entre le quatrième v4 et le cinquième point de visée au sol v5 est sensiblement égale à 20,7cm; et la distance d5 entre le cinquième v5 et le sixième point de visée au sol v6 est sensiblement égale à 25cm.

13. Véhicule selon l'une quelconque des revendications 7 à 12, **caractérisé en ce qu'**au moins une partie des capteurs (c1, à c11) sont orientés latéralement vers l'extérieur du véhicule.

14. Véhicule selon l'une quelconque des revendications 7 à 13, **caractérisé en ce qu'**au moins une partie des capteurs (c1 à c11) sont inclinés par rapport à la verticale avec un angle sensiblement égal ou supérieur à leur demi-angle (A) de cône de vision (7).

15. Véhicule selon l'une quelconque des revendications 7 à 14, **caractérisé en ce qu'**au moins une partie des capteurs (c1 à c11) sont inclinés par rapport à la verticale avec un angle compris entre 5 et 45 degrés environ.

16. Véhicule selon l'une quelconque des revendications 7 à 15, **caractérisé en ce qu'**au moins une partie des capteurs (c1 à c11) sont disposés dans le bouclier avant (8) du véhicule.

**Patentansprüche**

1. Vorrichtung zum Erfassen einer Fahrbahnoberfläche für ein Fahrzeug, mit mehreren Sensoren (c1 bis cn), die auf die Fahrbahnoberfläche (4) gerichtet werden, um Veränderungen an dieser festzustellen, und mit einer Einrichtung (2) zum Verarbeiten der von den Sensoren gewonnenen Daten, **dadurch gekennzeichnet, dass** mindestens ein Teil der Sensoren derart zueinander angeordnet ist, dass die Querabstände (d1 bis d10) zwischen zwei benachbarten Beobachtungspunkten auf dem Boden (v1 bis v11) der Sensoren (cn) zur Längsachse (5) hin in einer Richtung zunehmen, die im Wesentlichen senkrecht zur Achse (5) verläuft.

2. Erfassungsvorrichtung nach Anspruch 1, **dadurch gekennzeichnet, dass** sie mindestens fünf Sensoren (c1 bis c5) umfasst.

3. Erfassungsvorrichtung nach Anspruch 1 oder 2, **dadurch gekennzeichnet, dass** die Sensoren (c1 bis cn) auf beiden Seiten einer Längsmittelachse (5) angeordnet sind und dass die Querabstände (d1 bis d10) zwischen den Beobachtungspunkten auf dem Boden (vn) der Sensoren im Wesentlichen symmetrisch gegenüber der Achse (5) sind.

4. Erfassungsvorrichtung nach einem der Ansprüche 1 bis 3, **dadurch gekennzeichnet, dass** der Querabstand (dn) in Zentimeter zwischen zwei benachbarten Beobachtungspunkten auf dem Boden (vn, vn+1) durch die Formel $dn = k.R^n$ gegeben ist, bei der n die laufende Nummer des Beobachtungspunktes auf dem Boden (vn) zur Längsachse (5) hin ist, R ein erster konstanter multiplikativer Koeffizient, der im Wesentlichen 1,2 entspricht, und k ein zweiter konstanter Koeffizient, der im Wesentlichen 10 entspricht.

5. Vorrichtung nach einem der Ansprüche 1 bis 3, **dadurch gekennzeichnet, dass** der Abstand d 1 zwischen dem ersten Beobachtungspunkt v1 und dem zweiten Beobachtungspunkt v2 auf dem Boden im Wesentlichen 12 Zentimeter entspricht, der Abstand d2 zwischen dem zweiten Beobachtungspunkt v2 und dem dritten Beobachtungspunkt auf dem Boden v3 im Wesentlichen 14,4, Zentimeter, der Abstand d3 zwischen dem dritten Beobachtungspunkt v3 und dem vierten Beobachtungspunkt v4 auf dem Boden im Wesentlichen 17,3 Zentimeter, der Abstand d4 zwischen dem vierten Beobachtungspunkt v4 und dem fünften Beobachtungspunkt v5 auf dem Boden im Wesentlichen 20,7 Zentimeter und der Abstand d5 zwischen dem fünften Beobachtungspunkt v5 und dem sechsten Beobachtungspunkt v6 auf dem Boden im Wesentlichen 25 Zentimeter.

6. Erfassungsvorrichtung nach einem der Ansprüche 1 bis 3, **dadurch gekennzeichnet, dass** der Querabstand (dn) in Zentimeter zwischen zwei benachbarten Beobachtungspunkten auf dem Boden (vn, vn+1) der Sensoren durch die Formel

$$dn = L2 \cdot \left( \frac{E + L1}{E + 2c} \right)^n$$

bestimmt ist, sodass insbesondere eine unterbrochene Markierungslinie auf dem Boden erfasst wird, wobei n die laufende Nummer des Beobachtungspunktes auf dem Boden (vn) zur Längsachse (5) hin ist, L1 die Länge in Zentimeter eines Strichs (6) der unterbrochenen Linie, L2 die Breite in Zentimeter eines Strichs (6) der unterbrochenen Linie, E der Abstand in Zentimeter zwischen zwei aufeinander folgenden Strichen (6) und c eine bestimmte Konstante, die eine Sicherheitsspanne der Erfassung in Zentimeter festlegt.

7. Fahrzeug mit einer Erfassungsvorrichtung nach einem der vorhergehenden Ansprüche.

8. Fahrzeug nach Anspruch 7, **dadurch gekennzeichnet, dass** die Sensoren (c1 bis c11) auf beiden Seiten der Längsmittelachse (5) des Fahrzeugs angeordnet sind und dass die Querabstände (d1 bis d10) zwischen den Beobachtungspunkten auf dem Boden (v1 bis v11) der Sensoren im Wesentlichen symmetrisch gegenüber der Achse (5) sind.

9. Fahrzeug nach Anspruch 7 oder 8, **dadurch gekennzeichnet, dass** der Querabstand (dn) in Zentimeter zwischen zwei benachbarten Beobachtungspunkten auf dem Boden (vn, vn+ 1) der Sensoren durch die Formel $dn = k.R^n$ gegeben ist, wobei n die laufende Nummer des Beobachtungspunktes auf dem Boden (vn) zur Längsachse (5) hin ist, R ein erster konstanter multiplikativer Koeffizient, der im Wesentlichen 1,2 entspricht, und k ein zweiter konstanter Koeffizient, der im Wesentlichen 10 entspricht.

10. Fahrzeug nach Anspruch 7 oder 8, **dadurch gekennzeichnet, dass** der Querabstand (dn) in Zentimeter zwischen zwei benachbarten Beobachtungspunkten auf dem Boden (vn, vn+1) der Sensoren durch die Formel

$$dn = L2 \cdot \left( \frac{E + L1}{E + 2c} \right)^n$$

bestimmt ist, sodass insbesondere die Position des Fahrzeugs gegenüber einer unterbrochenen Markierungslinie auf dem Boden erfasst wird, wobei n die laufende Nummer des Beobachtungspunktes auf dem Boden (vn) eines Sensors (cn) von der Außenseite zur Innenseite des Fahrzeugs (1) ist, L1 die Länge in Zentimeter eines Strichs (6) der unterbrochenen Linie, L2 die Breite in Zentimeter eines Strichs (6) der unterbrochenen Linie, E der Abstand in Zentimeter zwischen zwei aufeinander folgenden Strichen (6) und c eine bestimmte Konstante, die eine Sicherheitsspanne der Erfassung in Zentimeter festlegt.

**11.** Fahrzeug nach einem der Ansprüche 7 bis 10, **dadurch gekennzeichnet, dass** es elf Sensoren (c1 bis c11) umfasst.

**12.** Fahrzeug nach Anspruch 11, **dadurch gekennzeichnet, dass** der Abstand d1 zwischen dem ersten Beobachtungspunkt v1 und dem zweiten Beobachtungspunkt v2 auf dem Boden im Wesentlichen 12 Zentimeter entspricht, der Abstand d2 zwischen dem zweiten Beobachtungspunkt v2 und dem dritten Beobachtungspunkt v3 auf dem Boden im Wesentlichen 14,4, Zentimeter, der Abstand d3 zwischen dem dritten Beobachtungspunkt v3 und dem vierten Beobachtungspunkt v4 auf dem Boden im Wesentlichen 17,3 Zentimeter, der Abstand d4 zwischen dem vierten Beobachtungspunkt v4 und dem fünften Beobachtungspunkt v5 auf dem Boden im Wesentlichen 20,7 Zentimeter und der Abstand d5 zwischen dem fünften Beobachtungspunkt v5 und dem sechsten Beobachtungspunkt v6 auf dem Boden im Wesentlichen 25 Zentimeter.

**13.** Fahrzeug nach einem der Ansprüche 7 bis 12, **dadurch gekennzeichnet, dass** mindestens ein Teil der Sensoren (c1 bis c11) seitlich zur Außenseite des Fahrzeugs gerichtet ist.

**14.** Fahrzeug nach einem der Ansprüche 7 bis 13, **dadurch gekennzeichnet, dass** mindestens ein Teil der Sensoren (c 1 bis c11) gegenüber der Vertikalen um einen Winkel geneigt ist, der im Wesentlichen gleich oder größer ist als ihr Halbwinkel (A) des Sichtkegels (7).

**15.** Fahrzeug nach einem der Ansprüche 7 bis 14, **dadurch gekennzeichnet, dass** mindestens ein Teil der Sensoren (c 1 bis c11) gegenüber der Vertikalen um einen Winkel zwischen ungefähr 5 und 45 Grad geneigt ist.

**16.** Fahrzeug nach einem der Ansprüche 7 bis 15, **dadurch gekennzeichnet, dass** mindestens ein Teil der Sensoren (c1 bis c11) im vorderen Schild (8) des Fahrzeugs angeordnet ist.

**Claims**

**1.** Device for detecting a running surface for a vehicle, comprising a plurality of sensors (c1 to cn) intended to be oriented towards the running surface (4) in order to determine modifications of the latter, and means (2) for data-processing the information recorded by the sensors, **characterised in that** at least some of the sensors are arranged relatively such that the transverse distances (d1 to d10) separating two adjacent aim points on the ground (v1 to v11) of sensors (cn) increase in the direction of a longitudinal axis and in a direction substantially perpendicular to that axis (5).

**2.** Detection device according to Claim 1, **characterised in that** it comprises at least five sensors (c1 to c5).

**3.** Detection device according to Claim 1 or 2, **characterised in that** the sensors (c1 to cn) are arranged on either side of a median longitudinal axis (5), and **in that** the transverse distances (d1 to d10) between the aim points on the ground (vn) of the sensors are substantially symmetrical with respect to that axis (5).

**4.** Detection device according to any one of Claims 1 to 3, **characterised in that** the transverse distance (dn) in cm separating two adjacent aim points on the ground (vn, vn+1) of sensors is given by the formula $dn = K \cdot R^n$, in which n is the serial number of the aim point on the ground (vn) in the direction of the longitudinal axis (5), R is a first constant multiplication coefficient substantially equal to 1.2, and k a second constant coefficient substantially equal to 10.

**5.** Device according to any one of Claims 1 to 3, **characterised in that** it comprises eleven sensors; the distance d1 between the first v1 and second v2 aim points on the ground being substantially equal to 12 cm; the distance d2 between the second v2 and third v3 aim points on the ground being substantially equal to 14.4 cm; the distance d3 between the third v3 and fourth v4 aim points on the ground being substantially equal to 17.3 cm; the distance d4 between the fourth v4 and fifth v5 aim points on the ground being substantially equal to 20.7 cm; and the distance d5 between the fifth v5 and sixth v6 aim points on the ground being substantially equal to 25 cm.

**6.** Detection device according to any one of Claims 1 to 3, **characterised in that** the transverse distance (dn) in cm separating two adjacent aim points on the ground (vn, vn+1) of sensors is given by the formula

$$dn = L2 \cdot \left( \frac{E + L1}{E + 2c} \right)^n,$$

so as to detect in particular a broken line of marking on the ground, and in which n is the serial number of the aim point on the ground (vn) in the direction of the longitudinal axis (5), L1 the length in cm of a dash (6) of the broken line, L2 the width in cm of a dash (6) of the broken line, E the distance in cm separating two consecutive dashes (6), and c a predetermined constant defining a detection safety margin in cm.

7. Vehicle comprising a detection device according to any one of the preceding claims.

8. Vehicle according to Claim 7, **characterised in that** the sensors (c1 to c11) are arranged on either side of the median longitudinal axis (5) of the vehicle, and **in that** the transverse distances (d1 to d10) between the aim points on the ground (v1 to v11) of the sensors are substantially symmetrical with respect to that axis (5).

9. Vehicle according to Claim 7 or 8, **characterised in that** the transverse distance (dn) in cm separating two adjacent aim points on the ground (vn, vn+1) of sensors is given by the formula $dn = K \cdot R^n$, in which n is the serial number of the aim point on the ground (vn) in the direction of the longitudinal axis (5), R is a first constant multiplication coefficient substantially equal to 1.2, and k a second constant coefficient substantially equal to 10.

10. Vehicle according to Claim 7 or 8, **characterised in that** the transverse distance (dn) in cm separating two adjacent aim points on the ground (vn, vn+1) of sensors is given by the formula

$$dn = L2 \cdot \left(\frac{E + L1}{E + 2c}\right)^n$$

so as to detect in particular the position of the vehicle with respect to a broken line of marking on the ground, and in which n is the serial number of the aim point on the ground (vn) of a sensor (cn) from the outside towards the inside of the vehicle (1), L1 the length in cm of a dash (6) of the broken line, L2 the width in cm of a dash (6) of the broken line, E the distance in cm separating two consecutive dashes (6), and c a predetermined constant defining a detection safety margin in cm.

11. Vehicle according to any one of Claims 7 to 10, **characterised in that** it comprises eleven sensors (c1 to c11).

12. Vehicle according to Claim 11, **characterised in that** the distance d1 between the first v1 and second v2 aim points on the ground is substantially equal to 12 cm; the distance d2 between the second v2 and third v3 aim points on the ground is substantially equal to 14.4 cm; the distance d3 between the third v3 and fourth v4 aim points on the ground is substantially equal to 17.3 cm; the distance d4 between the fourth v4 and fifth v5 aim points on the ground is substantially equal to 20.7 cm; and the distance d5 between the fifth v5 and sixth v6 aim points on the ground is substantially equal to 25 cm

13. Vehicle according to any one of Claims 7 to 12, **characterised in that** at least some of the sensors (c1 to c11) are oriented laterally towards the outside of the vehicle.

14. Vehicle according to any one of Claims 7 to 13, **characterised in that** at least some of the sensors (c1 to c11) are tilted with respect to the vertical at an angle substantially equal to or greater than the half-angle (A) of their cone of vision 7.

15. Vehicle according to any one of Claims 7 to 14, **characterised in that** at least some of the sensors (c1 to c11) are tilted with respect to the vertical at an angle comprised between approximately 5 and 45 degrees.

16. Vehicle according to any one of Claims 7 to 15, **characterised in that** at least some of the sensors (c1 to c11) are arranged in the front shield (8) of the vehicle.

EP 1 366 479 B1

FIG.1

FIG.2

FIG.3

EP 1 366 479 B1

⊕   ⊕   ⊕   ⊕   ⊕   ⊕   ⊕   ⊕   ⊕
$v_1$  $v_2$  $v_3$  $v_4$  $v_5$  $v_6$  $v_7$  $v_8$  $v_9$

5

## FIG.4

⊕   ⊕   ⊕   ⊕       ⊕   ⊕   ⊕   ⊕
$v_1$  $v_2$  $v_3$  $v_4$      $v_5$  $v_6$  $v_7$  $v_8$

5

## FIG.5

$C_1$  $C_2$  $C_3$     $C_n$

M

2

V

S

9

## FIG.6

11